**Europäisches Patentamt**

**European Patent Office**

**Office européen des brevets**

(11) Veröffentlichungsnummer: **0 245 865**
**B1**

## EUROPÄISCHE PATENTSCHRIFT

(45) Veröffentlichungstag der Patentschrift:
**26.07.89**

(51) Int. Cl.⁴: **F16B 13/10**

(21) Anmeldenummer: **87107025.6**

(22) Anmeldetag: **14.05.87**

(54) Verfahren zum Einsetzen eines Ankerbolzens in ein Bohrloch eines Befestigungsgrundes und Ankerbolzen für dieses Verfahren.

(30) Priorität: **16.05.86 DE 3616654**
**27.01.87 DE 3702336**

(43) Veröffentlichungstag der Anmeldung:
**19.11.87 Patentblatt 87/47**

(45) Bekanntmachung des Hinweises auf die Patenterteilung:
**26.07.89 Patentblatt 89/30**

(84) Benannte Vertragsstaaten:
**AT CH DE LI**

(56) Entgegenhaltungen:
**AT-B- 295 814**
**DE-A- 3 237 059**
**DE-U- 8 125 545**

(73) Patentinhaber: **Ryffel, Christian, Silserweg 5,**
**CH-7000 Chur(CH)**

(72) Der Erfinder hat auf seine Nennung verzichtet

(74) Vertreter: **Blumbach Weser Bergen Kramer Zwirner**
**Hoffmann Patentanwälte, Radeckestrasse 43,**
**D-8000 München 60(DE)**

## Beschreibung

Die Erfindung betrifft ein Verfahren zum Einsetzen eines Ankerbolzens in ein Bohrloch eines Befestigungsgrundes gemäß dem Gattungsbegriff des Patentanspruches 1. Ferner betrifft die Erfindung einen Ankerbolzen für ein derartiges Verfahren gemäß dem Gattungsbegriff der Patentansprüche 15, 25 bzw. 32.

Ein Verfahren der genannten Art ist beispielsweise durch DE-U 8 125 545 und DE-A 3 509 624, Offenlegungstag 18.9.86, bekannt geworden. Bei dem bekannten Verfahren wird eine Spreizhülse mit ihrem hinteren Ende voran in ein Bohrloch des Befestigungsgrundes eingeführt. Die Spreizhülse weist von einer vorderen ringförmigen Stirnfläche ausgehende Schlitze sowie in dem an diese Stirnfläche angrenzenden Bereich der Mantelfläche aus dieser vorstehende Schneidelemente auf. Im hinteren Abschnitt der Spreizhülse ist ein Innengewinde vorgesehen.

Durch Eintreiben eines sich verjüngenden Abschnittes am hinteren Ende eines Schaftes eines Setzwerkzeuges in die Spreizhülse mittels einer Axial- und Drehbewegung wird die Spreizhülse gespreizt und in Drehung versetzt und hierdurch im Bohrloch eine Hinterschneidung mit einem Absatz vor der vorderen Stirnfläche der Spreizhülse erzeugt. Um zu erreichen, daß sich die Spreizhülse beim Drehen des Setzwerkzeuges mitdreht, ist der sich verjüngende Abschnitt des Schaftes mit einer Längsprofilierung versehen bzw. es ist ein in Drehrichtung wirkender Formschluß zwischen Schaft und Spreizhülse vorgesehen. Zu diesem Zweck trägt der Schaft Vorsprünge, die in Längsnuten der Spreizhülse eingreifen.

Nach Erzeugen der Hinterschneidung im Bohrloch mittels einer drehenden und schlagenden Bewegung des Setzwerkzeuges wird dieses wieder aus dem Bohrloch entfernt und in den hinteren Gewindeabschnitt der nunmehr im Bohrloch verankerten Spreizhülse ein Gewindebolzen eingeschraubt, der mit der Spreizhülse den im Bohrloch verankerten Ankerbolzen bildet. Die Gewindeverbindung zwischen dem Gewindebolzen und der Spreizhülse stellt hierbei einen in Ausziehrichtung des Gewindebolzens wirkenden Formschluß dar.

Verankerungen dieser Art können spreizdruckfrei ausgebildet sein, durch die Hinterschneidung im Bohrloch entsteht eine annähernd quer zur Längsachse der Bohrung gerichtete Stützschulter, welche die Zugbelastung des Ankerbolzens ohne Keilwirkung für den Untergrund aufnimmt, so daß derartige Verankerungen insbesondere für den Einsatz in rißgefährdeten Zugzonen des Befestigungsgrundes geeignet sind.

Zur Herstellung der Hinterschneidung im Bohrloch und zum Verankern des Bolzens in der Spreizhülse sind allerdings zwei Verfahrensschritte erforderlich, nämlich das Eintreiben des Schaftes eines Setzwerkzeuges mittels einer schlagenden und drehenden Bewegung in die Spreizhülse und nach Entfernen des Setzwerkzeuges das Einschrauben des Bolzens in die verankerte Spreizhülse. Außerdem ist der für die Zugbelastung wirksame Querschnitt des Bolzens durch den Durchmesser des Innengewindes der Spreizhülse bestimmt, der im Hinblick auf eine ausreichende Materialstärke der Spreizhülse stets wesentlich kleiner als der Durchmesser des Bohrloches im Befestigungsgrund ist.

Durch DE-A 3 139 174 ist ein Ankerbolzen bekannt geworden, der einen zylindrischen Schaft und einen im Durchmesser vergrößerten spreizbaren Kopf aufweist, an dessen hinterem Ende wenigsten zwei sich radial gegenüberliegende, als Hartmetallstifte ausgebildete Schneidelemente angeordnet sind, die radial über den Umfang des Kopfes hin ausragen. Der Kopf weist ferner an der hinteren Stirnseite einen axial verlaufenden Schlitz auf, in den ein axial verschiebbarer Spreizkeil mit seinem verjüngten Ende hineinragt. Zum Einsetzen dieses Ankerbolzens in einen Befestigungsgrund wird hier zunächst eine zylindrische Bohrung eingebracht, dann eine Mörtelpatrone in die Bohrung eingeschoben und schließlich der Ankerbolzen zusammen mit dem im axial verlaufenden Schlitz eingeklemmten Spreizkeil in die Bohrung unter drehend-schlagender Bewegung und stetigem axialen Druck eingeführt, wobei die Mörtelpatrone zerstört und ihr Inhalt vermischt wird. Sobald die Spitze des Spreizkeils den Bohrlochgrund erreicht hat, wird der Kopf über den im Bohrloch aufstehenden Spreizkeil geschoben. Hierbei werden die Schneidelemente entsprechend der Spreizung des Kopfes durch den Spreizkeil gegen die Bohrlochwandung gedrückt und ein sich kegelförmig erweiternder Hinterschnitt erzeugt. Der Übergang vom Schaft zum Kopf des Ankerbolzens kann in Form einer stufenförmigen Erweiterung ausgebildet sein, durch die eine Ringschulter gebildet wird, die sich gegen die durch die Mörtelpatrone eingebrachte Mörtelmasse abstützt und hierdurch einen geringen Anfangsschlupf bewirkt.

Im allgemeinen vermag sich der Anker bei einer Rißbildung im Bereich der Bohrung nicht mehr durch seine Schulter an der eingebrachten Mörtelmasse abzustützen, da diese dann den Beanspruchungen nicht mehr standhält, sondern er wird so weit herausgezogen, bis der gespreizte Kopf mit der abgeschrägten Bohrlochwandung in Berührung kommt. Hierdurch wird ein in vielen Fällen unzulässiger Schlupf bewirkt.

Durch die US-A 3 848 506 ist ein Ankerbolzen mit einem zylindrischen Schaft bekannt geworden, dessen hinteres Ende einen sich verjüngenden Abschnitt enthält, auf den eine Spreizhülse aufgesetzt ist, die von einer vorderen ringförmigen Stirnfläche ausgehende Schlitze aufweist und aus ihrer Mantelfläche vorstehende Elemente enthält. Der sich verjüngende Abschnitt am Ende des Schaftes ist mit einem Außengewinde versehen und die Spreizhülse weist ein daran angepaßtes Innengewinde auf. Die Spreizhülse kann aus einzelnen, durch einen Federring zusammengehaltenen Segmenten bestehen.

Der Ankerbolzen wird in ein Bohrloch eines Befestigungsgrundes eingeführt und dann durch Drehen des Schaftes der mit dem Außengewinde versehene, sich verjüngende Abschnitt in die Spreizhülse eingeschraubt und hierbei ein Spreizen und Anpressen der Hülse an die Innenwand des Bohrloches erreicht. Durch die aus der Mantelfläche vorstehenden Elemente wird in Verbindung mit einem kleinen Konuswinkel des Innengewindes sichergestellt, daß sich diese beim Einschrauben des Schaftes nicht mitdrehen kann. Die Verankerung im Bohrloch des Befestigungsgrundes erfolgt hier über die Spreizkraft der Hülse. Der für die Zugbelastung wirksame Querschnitt ist hier ähnlich reduziert wie bei der eingangs beschriebenen Verankerung.

Aufgabe der Erfindung ist es , bei einem Verfahren der einleitend genannten Art durch die Eintreibbewegung des Schaftes sowohl die Hinterschneidung im Bohrloch herzustellen als auch den Bolzen in der Spreizhülse zu verankern, das heißt,das Setzen des Ankerbolzens mit einem einzigen Verfahrensschritt zu ermöglichen.

Ferner ist es Aufgabe der Erfindung, Ankerbolzen für ein derartiges Verfahren verfügbar zu machen. Schließlich soll eine Vergrößerung des für die Zugbelastung wirksamen Querschnittes des Ankerbolzens ermöglicht werden.

Das erfindungsgemäße Verfahren ist durch die Merkmale des Anspruches 1 gekennzeichnet. Vorteilhafte Ausgestaltungen des Verfahrens sind den Ansprüchen 2 bis 14 zu entnehmen.

Erfindungsgemäße Ankerbolzen sind durch die Merkmale der Ansprüche 15, 25 und 32 gekennzeichnet. Vorteilhafte Ausgestaltungen dieser Ankerbolzen sind in den restlichen Ansprüchen angegeben.

Bei dem Verfahren und den Ankerbolzen gemäß dieser Erfindung ist die Verbindung zwischen Schaft und Spreizhülse so ausgebildet, daß durch einen in Drehrichtung wirkenden Formschluß und/oder durch einen Reibungsschluß zwischen Schaft und Spreizhülse diese beim Eintreiben des Schaftes in die Spreizhülse wenigstens zeitweise mitgedreht und am Ende des Spreizvorganges zwischen Spreizhülse und Schaft ein in Ausziehrichtung des Schaftes wirkender Formschluß hergestellt wird. Damit ist es möglich, den Schaft zugleich als in der Spreizhülse verankerten Bolzen zu benutzen, so daß der Ankerbolzen mit einem einzigen Verfahrensschritt gesetzt werden kann.

Hierbei sind zwei gegensätzliche Forderungen zu erfüllen. Zur Herstellung der Hinterschneidung ist es erforderlich, die Spreizhülse mitzudrehen und beim Einschrauben des Bolzens in die Spreizhülse zur Herstellung des in Ausziehrichtung wirkenden Formschlusses muß ein Mitdrehen der Spreizhülse verhindert werden. Diese gegensätzlichen Forderungen lassen sich beispielsweise dadurch erfüllen, daß die Spreizhülse zweiteilig ausgebildet wird, wobei der eine Teil in das Bohrloch drehfest eingesetzt wird und der andere Teil zur Herstellung der Hinterschneidung mitgedreht wird. Die gegensätzlichen Forderungen lassen sich auch bei einer einstückigen Spreizhülse realisieren, wenn hier für den in Ausziehrichtung des Bolzens wirkenden Formschluß ein absatzförmiger Eingriff zwischen Schaft und Spreizhülse gewählt wird, der alleine durch die Axialbewegung des Schaftes unter kurzzeitigem Spreizen und Zurückfedern der Spreizhülse herstellbar ist. Besonders geeignet hierfür ist ein durch Umfangsrillen gebildetes Säge profil zwischen Schaft und Spreizhülse. Im Gegensatz zu einer Gewindeverbindung ist hier zur Herstellung des in Ausziehrichtung wirkenden Formschlusses zwischen Spreizhülse und Schaft keine relative Drehbewegung erforderlich, sondern nur eine Axialbewegung, so daß der den Bolzen bildende Schaft in der Hülse auch verankert werden kann, wenn diese auf der gesamten Eintreibstrecke drehfest mit dem Schaft verbunden ist.

Es ist auch möglich, die beiden gegensätzlichen Forderungen dadurch in Einklang zu bringen, daß zunächst eine drehschlüssige Verbindung und am Ende eine drehfreie Verbindung vorgesehen wird, beispielsweise durch einen aus dem Schaft vorstehenden Vorsprung, der zunächst in einer axial ausgerichteten Nut der Spreizhülse geführt wird, die am Ende der Eintreibstrecke in eine Umfangsnut übergeht. Schließlich ist es auch möglich, einen eine Relativdrehung verlangenden axialen Formschluß, wie eine Gewindeverbindung, neben der Herstellung der Hinterschneidung zu realisieren, wenn während des Drehens des Schaftes bei der Eintreibbewegung die Spreizhülse zeitweise mitgenommen wird und zeitweise im Bohrloch festgehalten wird, oder wenn während des Eintreibens des Schaftes in die Spreizhülse zwischen beiden Teilen ein Schlupf ermöglicht wird. Ein solcher Verfahrensablauf läßt sich auf einfache Weise über eine Reibungsverbindung zwischen Schaft und Spreizhülse realisieren, insbesondere bei Anwendung einer mit einer Schlagbewegung gekoppelten Drehbewegung beim Eintreiben des Schaftes.

Es können zur Realisierung nur eines zeitweisen Mitdrehens im Verbindungsbereich zwischen Schaft und Spreizhülse auch Mitnehmerstifte vorgesehen werden, die durch einen sich beim Eintreiben vergrößernden Drehwiderstand abscheren und dann eine Relativdrehung zwischen Schaft und Hülse zulassen.

Die Axialbewegung beim Eintreiben des Schaftes in die Spreizhülse kann über das Setzwerkzeug aufgebracht werden. Sie kann auch von der Drehbewegung des Setzwerkzeuges abgeleitet werden, indem ein am hinteren Ende des Schaftes vorhandener Gewindeansatz in einen Gewindeabschnitt der Spreizhülse eingedreht wird.

Ist bei dem erfindungsgemäßen Ankerbolzen die Spreizhülse mit Längsschlitzen oder Längsnuten versehen, die nahezu bis zum Kopfende reichen, dann erfolgt beim Eindringen des Schaftes eine stärkere Spreizung im vorderen Bereich der Spreizhülse als im hinteren Bereich. Die Spreizhülse kann aber auch aus mehreren Segmenten gebildet sein, die dann entstehen, wenn die Hülse an mehreren Stellen des Umfangs axial geschnitten wird. In diesem Fall müssen die Segmente durch wenigstens einen Federring zusammengehalten werden. Vorzugsweise sind zwei Federringe am hinteren und am vorderen Ende der so gebildeten Spreizhülse vorhanden. Beim Eindringen des hinteren konischen Endes des Schaftes in die so ausgebildete Spreizhülse werden die Segmente nahezu auf ihrer gesamten Länge parallel nach außen verschoben und bilden eine im wesentlichen zylindrische Hinterschneidung mit einem Absatz auf dem sich die vordere Stirnfläche der Spreizhülse abstützt.

Die Verbindung zwischen dem hinteren Schaftende und der Spreizhülse ist so ausgebildet, daß die Spreizhülse gespreizt und gedreht werden kann. Falls ein kraftschlüssiger Sitz in der Hinterschneidung gewünscht ist, soll nach dem Erzeugen der Hinterschneidung die Spreizhülse ohne Drehen um ein vorgegebenes Maß weitergespreizt werden können. Außerdem muß im eingesetzten Zustand des Ankerbolzens gewährleistet sein, daß sich auch bei einer Rißbildung im Bereich des Bohrloches das Schaftende nicht aus der Spreizhülse lösen kann.

Die genannten Forderungen lassen sich vorteilhaft und mit enem geringen Aufwand dadurch erfüllen, daß das sich verjüngende Ende des Schaftes wenigstens auf einem Teil seiner Länge mit einem Außengewinde versehen ist und die Spreizhülse ein daran angepaßtes Innengewinde aufweist. Bei geeigneter Wahl des Neigungswinkels der Verjüngung, der sich auch etwas ändern kann, sowie der Steigung des Gewindes läßt sich erreichen, daß beim Eindrehen des Schaftendes in die Spreizhülse diese mitgenommen wird und sich gleichzeitig spreizt und so der Hinterschnitt erzeugt wird. Durch einen zusätzlichen axialen Druck am Ende des Hinterschneidvorgangs läßt sich die Reibung zwischen dem Bohrgrund und der Spreizhülse erhöhen, so daß diese beim Weiterdrehen des Schaftes nicht mehr mitgenommen wird, sondern nur noch um ein vorgegebenes Maß gespreizt wird. Das Festhalten kann durch auf die hintere Stirnseite der Spreizhülse aufgebrachte Vorsprünge begünstigt werden.

Es ist auch möglich, bei geeigneter Materialauswahl und Bemessung der Schneidelemente sich deren Abrieb beim Hinterschneidvorgang zunutze zu machen und das Festhalten der Spreizhülse am Ende des Hinterschneidvorgangs durch vergrößerte Reibung aufgrund eines vergrößerten Flächenkontaktes zwischen der Mantelfläche der Spreizhülse und der Bohrlochwandung zu bewirken.

Die Erfindung wird durch Ausführungsbeispiele anhand von 13 Figuren näher erläutert. Es zeigen

Fig. 1 in einer perspektivischen Darstellung den hinteren Bereich eines erfindungsgemäßen Ankerbolzens mit einer Gewindeverbindung zwischen Schaft und Spreizhülse,

Fig. 2 und 3 jeweils in einer Schnittansicht den Ankerbolzen nach Fig. 1, nachdem er in ein vorgebohr tes Loch eingeführt worden ist und nachdem der Hinterschnitt in dem Bohrloch durchgeführt worden ist,

Fig. 4 und 5 Schnittansichten eines Ankerbolzens, bei dem die Verbindung zwischen Schaft und Spreizhülse in Form eines Sägenprofils durch Umfangsrillen ausgebildet ist, einmal im nicht-gespreizten und einmal im gespreizten Zustand der Spreizhülse,

Fig. 6 in einer Schnittansicht einen Ankerbolzen, der zusätzlich zu einer sägenprofilartig ausgebildeten Verbindung zwischen Schaft und Spreizhülse eine Gewindeverbindung aufweist,

Fig. 7 einen der Fig. 6 entsprechenden Ankerbolzen, bei dem die Gewindeverbindung durch eine in Drehrichtung formschlüssige Verbindung ersetzt ist,

Fig. 8 einen Ankerbolzen mit einer Gewindeverbindung und Mitnehmerstiften,

Fig. 9 einen Ankerbolzen mit einer zweiteiligen Spreizhülse,

Fig. 10 bis 13 in verschiedenen Ansichten einen Ankerbolzen mit einer bajonettartigen Verbindung zwischen Schaft und Spreizhülse,

Fig. 14 einen Ankerbolzen mit hülsenartigem Schaft.

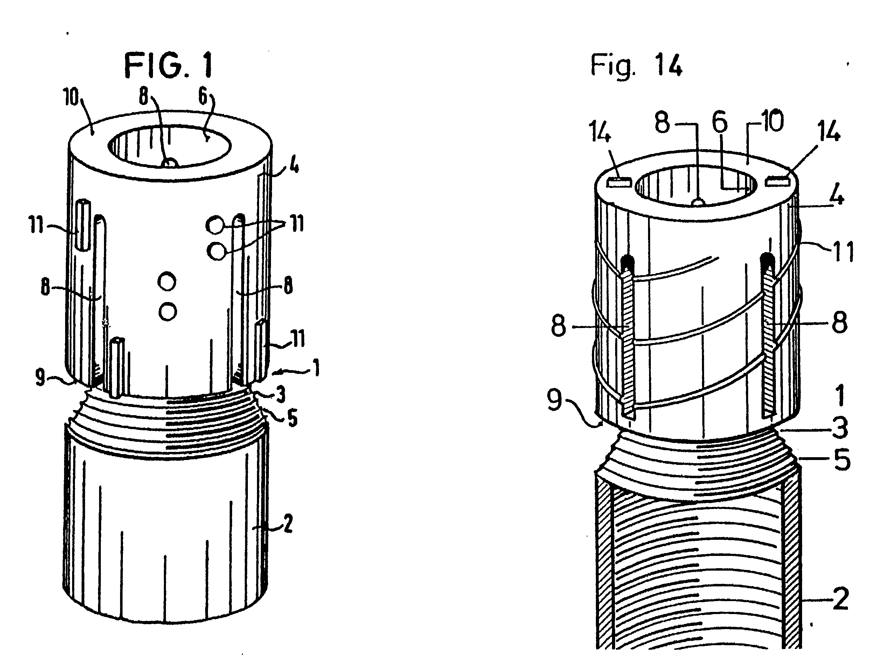

Der in Fig. 1 teilweise dargestellte Ankerbolzen 1 enthält einen zylindrischen Schaft 2 und ein auf das hintere Ende 3 dieses Schaftes - in der Darstellung nach Fig. 1 ist es das obere Ende - aufgesetzte Spreizhülse 4. Der zylindrische Schaft 2 kann, wie dargestellt, eine glatte Mantel fläche aufweisen, er kann auch mit einem Gewinde versehen sein, insbesondere, wenn ein Einsatz als Verbundanker erwünscht ist, bei dem durch eine mittels einer Mörtelpatrone in das Bohrloch eingebrachte Mörtelmasse ein Verbund hergestellt wird. Das nicht dargestellte vordere Ende des Schaftes ist dem Verwendungszweck des Ankerbolzens angepaßt und kann einen Profilabschnitt aufweisen, der für das Einsetzen in eine Bohrmaschine oder einen Bohrhammer geeignet ist.

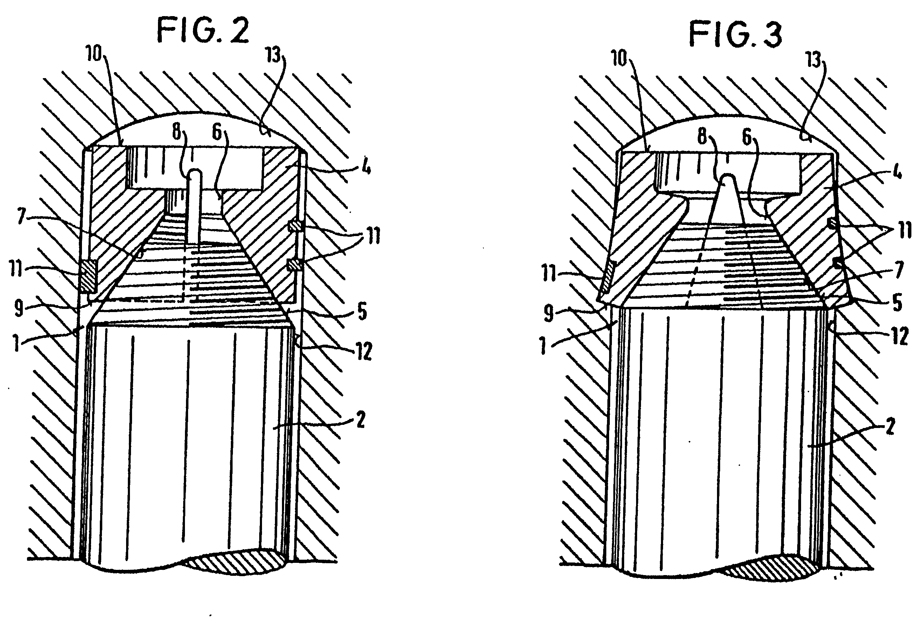

Das hintere Ende 3 des Schaftes 2 verjüngt sich, und zwar im dargestellten Fall nach Art eines Kegelstumpfes der mit einem Außengewinde 5 versehen ist. Die Spreizhülse 4 weist eine Axialbohrung 6 auf, die sich nach vorne kegelförmig erweitert und mit einem an das Außengewinde angepaßten Innengewinde 7 (siehe Fig. 2) versehen ist.

Um ein Spreizen der Spreizhülse 4 zu ermöglichen, besitzt diese gleichmäßig um den Umfang verteilte Längsschlitze 8, die sich von der vorderen Stirnfläche 9 der Spreizhülse aus so weit nach hinten erstrecken, daß die gewünschte Spreizwirkung erzielt werden kann. Die hintere Stirnfläche der Spreizhülse 4 ist mit 10 bezeichnet, sie bildet zugleich das hintere Ende des Ankerbolzens. Aus der Mantelfläche der Spreizhülse 4 stehen Schneidelemente 11 vor, durch die der Hinterschnitt erzeugt wird. Diese Schneidelemente 11 müssen insbesondere im an die vordere Stirnfläche 9 angrenzenden Bereich der Mantelfläche der Spreizhülse vorgesehen sein, da in diesem Bereich ein absatzförmiger Hinterschnitt als Aufstandsfläche für die vordere Stirnfläche 9 der Spreizhülse erzeugt werden soll. Im dargestellten Fall sind die Schneidelemente 11 durch Schneideinsätze gebildet. Es könnten aber auch entsprechende Schnittkanten aus dem Material der Spreizhülse selbst ausgeformt sein, beispielsweise durch vorstehende Schneidkanten, die bei der Herstellung der Schlitze 8 gebildet werden.

Im in Fig. 1 dargestellten Zustand entspricht der Außendurchmesser der Spreizhülse 4 etwa dem Außendurchmesser des Schaftes 2 und der Durchmesser der Umhüllenden der vorstehenden Schneidelemente 11 entspricht etwa dem Innendurchmesser des vorgebohrten Loches, in das der Ankerbolzen einzusetzen ist. Er kann auch geringfügig größer sein.

Fig. 2 stellt in einer Längsschnittansicht den oberen Teil des in ein Bohrloch 12 eingeführten Ankerbolzens 1 von Fig. 1 dar. Diese Darstellung zeigt auch, daß die Axialbohrung 6 nach vorne (in der Zeichnung nach unten) kegelförmig erweitert ist und das Innengewinde 7 aufweist. Auch hinten ist diese Bohrung erweitert, um in diesem Bereich, in dem die Längsschlitze 8 enden, die Steifigkeit etwas zu verringern. Der Ankerbolzen ist so weit in die Vorbohrung 12 eingeführt, bis, wie dargestellt, die hintere Stirnfläche 10 der Spreizhülse 4 gegen den Bohrlochgrund 13 stößt. Es wird nun der Schaft mittels einer Bohrmaschine so gedreht, daß das Außengewinde 5 in das Innengewinde 7 eindringt, hierbei wird die Spreizhülse mitgenommen und es wird durch Drehen und Spreizen der Spreizhülse schließlich der in Fig. 3 dargestellte Zustand erreicht. Hierbei haben sich die Schneidelemente 11 so weit abgerieben, daß es zu einer flächigen Berührung zwischen der Mantelfläche der Spreizhülse 4 und der Innenwandung des Bohrlochs im Bereich der Hinterschneidung kommt, wodurch der Drehwiderstand der Spreizhülse so weit ansteigt, daß diese nicht mehr mitgedreht werden kann. Durch Weiterdrehen des Schaftes 2 um einen vorgegebenen Winkel wird die gewünschte Spreizkraft erzielt, mit der die Spreizhülse in der Hinterschneidung festsitzt.

Auf der hinteren Stirnfläche der Spreizhülse 4 können Vorsprünge angebracht sein, durch die das Festhalten der Spreizhülse am Bohrgrund beim Eindringen des Schaftes begünstigt wird.

Bei dem beschriebenen Ausführungsbeispiel wird die Spreizhülse aufgrund eines Reibungsschlusses zwischen dem Außengewinde des Schaftes und dem Innengewinde der Spreizhülse zeitweise in Drehrichtung mitgenommen. Zu diesem Zweck muß zeitweise die durch den Reibungsschluß übertragbare Kraft größer als die Festhaltekraft der Spreizhülse im Bohrloch sein. Mit einer kombinierten Schlag- und Drehbewegung des Schaftes läßt sich dies innerhalb großer Bereiche der für den Reibungsschluß verantwortlichen Parameter erreichen, da sich durch diese kombinierte Bewegung einerseits die Normalkraft in der Beziehung

$$R = \mu \times N$$

innerhalb weiter Grenzen variieren läßt - μ bedeutet den Reibungskoeffizienten und R die Reibungskraft - und andererseits durch diese kombinierte Bewegung die beim Hinterdrehen zu überwindende Festhaltekraft der Spreizhülse im Bohrloch wesentlich verringern läßt. Die Schneidelemente 11 führen aufgrund der kombinierten Schlag- und Drehbewegung eine Zick-Zack-Bewegung kleiner Amplitude aus und verringern auf diese Weise den durch das Hinterschneiden verursachten Drehwiderstand. Dieser Effekt tritt insbesondere dann auf, wenn statt längerer in Axialrichtung der Spreizhülse ausgerichteter Schneidelemente kleinere, über die Mantelfläche der Spreizhülse verteilte Schneidelemente 11 vorgesehen sind.

Das für den Hinterschneidvorgang erforderliche Mitdrehen der Spreizhülse beim Eintreiben des Schaftes hängt nicht nur von der Größe und der Frequenz der Schlagbeanspruchung sowie der Verteilung der Schneidelemente, sondern auch vom Neigungswinkel des sich verjüngenden Abschnittes und dem Winkel der Zahnflanken des Gewindes ab, die bei der Schlagbeanspruchung aneinander gepreßt werden. Der Neigungswinkel des sich verjüngenden Abschnittes liegt, bezogen auf die Mittelachse, vorzugsweise zwischen 10 und 30°. Durch den Winkel der Zahnflanken, bezogen auf eine Senkrechte zur Mittelachse, läßt sich die bei einer axialen Schlagbewegung des Schaftes auf die Reibungsfläche einwirkende Normalkomponente steuern. Je kleiner dieser Winkel ist, umso größer wird die Normalkomponente und damit die Reibungskraft.

Eine weitere Steuerung der Mitnahme der Spreizhülse beim Drehen des Schaftes ist auch dadurch erreichbar, daß die Steigungen des Innengewindes der Spreizhülse und des Außengewindes auf dem sich verjüngenden Abschnitt des Schaftes etwas verschieden voneinander ausgebildet werden. Wenn diese Maßnahme im hinteren Bereich vorgesehen wird, dann wird gewährleistet, daß sich am Ende des Spreizvorganges der Hülse diese zwangsweise mitdreht, so daß ein spreizdruckfreier Sitz der Spreizhülse im Bohrloch herstellbar ist.

Durch die Gewindeverbindung wird im übrigen auch der in Ausziehrichtung des Schaftes wirkende Formschluß gebildet. Im Hinblick auf diesen Formschluß ist es vorteilhaft, wenn die vorderen Zahnflanken des auf den Schaft aufgebrachten Außengewindes, das heißt die Zahnflanken, die sich auf der dem hinteren Schaftende abgewandten Seite befinden, etwa senkrecht zur Schaftachse verlaufen. Wird der Neigungswinkel dieser Zahnflanken gegenüber der Schaftachse auf Werte über 45° erhöht, so ist kein ausreichender Formschluß in Ausziehrichtung des Schaftes mehr gewährleistet.

Wie Fig. 3 zeigt, ist der für die Zugbelastung wirksame Querschnitt des Ankerbolzens gegenüber den bekannten Verankerungen der einleitend genannten Art vergrößert, da zur Verankerung des Bolzens in der Spreizhülse ein Kegelgewinde verwendet und ein Teil der Spreizhülse in den hinterschnittenen Bereich des Bohrlochs gedrängt ist.

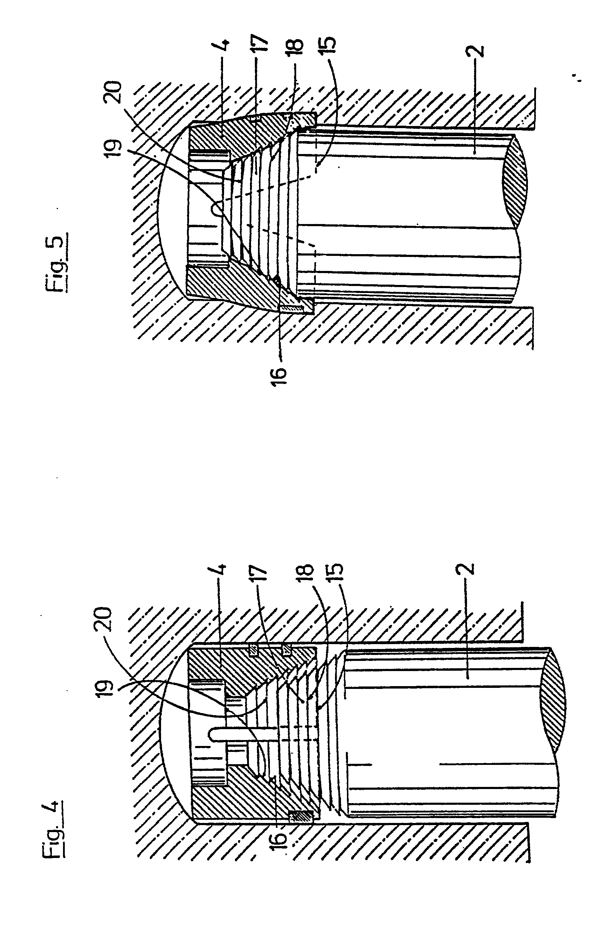

Das in den Fig. 4 und 5 dargestellte Beispiel einer Verankerung unterscheidet sich von dem der Fig. 2 und 3 im wesentlichen dadurch, daß als Verbindung zwischen Schaft und Spreizhülse nicht ein durch ein Gewinde gebildetes Sägenprofil, sondern ein durch Umfangsrillen gebildetes Sägenprofil vorgesehen ist. Der Schaft 2 weist in dem sich verjüngenden Abschnitt am hinteren Ende ein durch Umfangsrillen gebildetes Sägenprofil 15 und die Spreizhülse 4 ein komplementäres Sägenprofil 16 auf. Die hinteren Zahnflanken 17 des Sägenprofils 15, das heißt die Zahnflanken auf der dem hinteren Schaftende zugewandten Seite verlaufen schräg und die vorderen Zahnflanken 18 etwa senkrecht zur Schaftachse. Durch den Neigungswinkel der hinteren Zahnflanken wird, wie bei dem Ausführungsbeispiel der Fig. 2 und 3 bereits beschrieben, der ein zeitweises Mitdrehen der Spreizhülse gewährleistende Reibungsschluß zwischen Schaft und Spreizhülse beeinflußt sowie die Spreizkraft beim Hinterschneidvorgang und durch die vorderen Zahnflanken 18 die Verankerung des Schaftes 2 in der Spreizhülse, das heißt der in Ausziehrichtung des Schaftes wirkende Formschluß zwischen Schaft und Spreizhülse.

Beim Eintreiben des Schaftes 2 in die Spreizhülse 4 unter drehender und schlagender Bewegung werden die hinteren Zahnflanken 17 des Sägenprofils 15 gegen die vorderen Zahnflanken 19 des Sägenprofils 16 der Spreizhülse 4 gepreßt und diese durch den Reibungsschluß unter Überwindung der Festhaltekraft der Spreizhülse im Bohrloch zeitweise mit gedreht. Hierbei dringt das konische Ende des Schaftes 2 in die Spreizhülse ein, und die hinteren Zahnflanken 17 des Schaftes 2 bewegen sich infolge der Schlagbeanspruchung in axialer Richtung des Schaftes gegenüber den vorderen Zahnflanken 19 der Spreizhülse 4 bis sich die Sägenprofile 15 und 16 um einen Zahn gegeneinander verschoben haben und unter Zurückfedern der Spreizhülse die beiden Sägenprofile erneut verrastend ineinandergreifen. Am Ende des Eintreibvorganges ist nach Herstellung der Hinterschneidung das Sägenprofil 15 in axialer Richtung um einige Zähne weiter in das Gegenprofil der Spreizhülse 4 eingedrungen - dieser Zustand ist in Fig. 5 dargestellt -, und es wird aufgrund des Zurückfederns der Spreizhülse über die vorderen Zahnflanken 18 des Sägenprofils 15, die bei einer Ausziehbeanspruchung gegen die hinteren Zahnflanken 20 des Sägenprofils 16 stoßen, ein in Ausziehrichtung des Schaftes wirkender Formschluß gewährleistet. Da dieser Formschluß alleine durch die Axialbewegung des Schaftes unter kurzzeitigem Spreizen und Zurückfedern der Spreizhülse herstellbar ist, also nicht wie bei der Gewindeverbindung des ersten Ausführungsbeispiels zur Herstellung des in Ausziehrichtung wirkenden Formschlusses eine Relativdrehung zwischen Schaft und Spreizhülse erforderlich ist, können hier die Maßnahmen für den Hinterschneidvorgang unabhängig von den Maßnahmen der Verankerung des Schaftes 2 in der Spreizhülse 4 geplant werden, und es ist beispielsweise eine drehschlüssige Kopplung zwischen Schaft und Spreizhülse über den gesamten Eintreibvorgang des Schaftes möglich. Es könnte also anstelle des Mitdrehens durch den Reibungsschluß ein in Drehrichtung wirkender Formschluß wie bei den einleitend beschriebenen bekannten Verfahren vorgesehen werden, der eine schlupffreie Mitnahme der Spreizhülse während des gesamten Setzvorgangs gestattet.

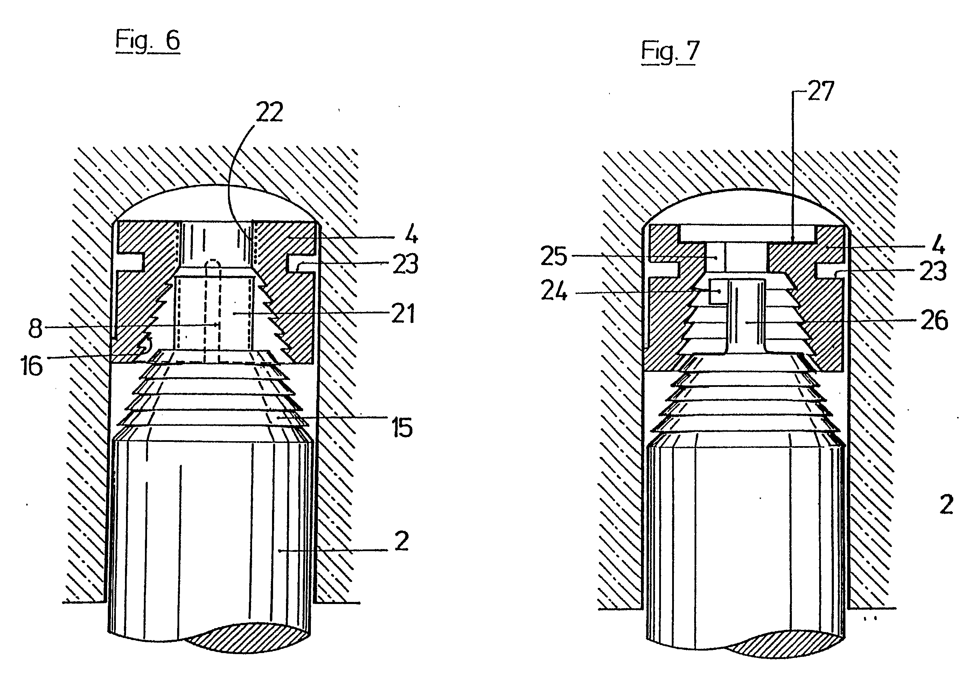

Bei dem in Fig. 6 dargestellten Ausführungsbeispiel trägt der Schaft 2, anschließend an den sich verjüngenden Abschnitt mit einem Sägenprofil 15, einen Gewindeansatz 21, der in einem Gewindeabschnitt 22 der Spreizhülse 4 eingreift. Außerdem weist die Spreizhülse 4 etwa in dem Bereich, in dem die Längsschlitze 8 enden, eine Umfangsnut 23 auf, durch die die Steifigkeit der Spreizhülse an dieser Stelle verringert und gleichzeitig verhindert wird, daß beim Spreizen der Spreizhülse im unteren Bereich der Gewindeabschnitt 22 unzulässig stark verformt wird. Dieser Gewindeabschnitt ist in Verbindung mit dem Gewindeansatz 21 dazu vorgesehen, neben oder statt einer Schlagbewegung durch das Setzwerkzeug den notwendigen axialen Vorschub des Schaftes 2 bei der Eintreibbewegung zu liefern. Die Sägenprofile 15 und 16 sind in gleicher Weise wie bei dem Ausführungsbeispiel nach den Fig. 4 und 5 ausgestaltet und erfüllen auch die gleiche Funktion. Im übrigen kann der Gewindeansatz 21 in Verbindung mit einem Gewindeabschnitt 22 auch bei einer Ausführungsform entsprechend den Fig. 2 und 3 verwendet werden. In diesem Fall müssen allerdings die Gewindesteigungen des auf dem sich verjüngenden Abschnitt des Schaftes 2 vorgesehenen Gewindes und des auf dem Gewindeansatz vorgesehenen Gewindes aneinander angepaßt sein.

Bei dem Ausführungsbeispiel nach Fig. 7 weist der Schaft 2 einen Vorsprung 24 auf, der zur Bildung eines in Drehrichtung wirkenden Formschlusses in eine Nut 25 der Spreizhülse 4 eingreift. Der Vorsprung 24 ist im vorliegenden Fall an einem zylindrischen Ansatz 26 des Schaftes 2 angebracht und die Anordnung und Länge der Nut 25 so gewählt, daß der in Drehrichtung wirkende Formschluß im hinteren Bereich der Eintreibstrecke gelöst ist. Zu diesem Zweck weist die Spreizhülse auf der hinteren Seite einen Ausschnitt 27 auf, in den der Vorsprung 24 am Ende der Eintreibstrecke austritt und sich frei drehen kann. Es soll aber betont werden, daß der Drehschluß, wie oben bereits ausgeführt, nicht aufgehoben werden muß, wenn als Verbindung zwischen Schaft und Spreizhülse ein durch Umfangsrillen gebildetes Sägenprofil eingesetzt wird.

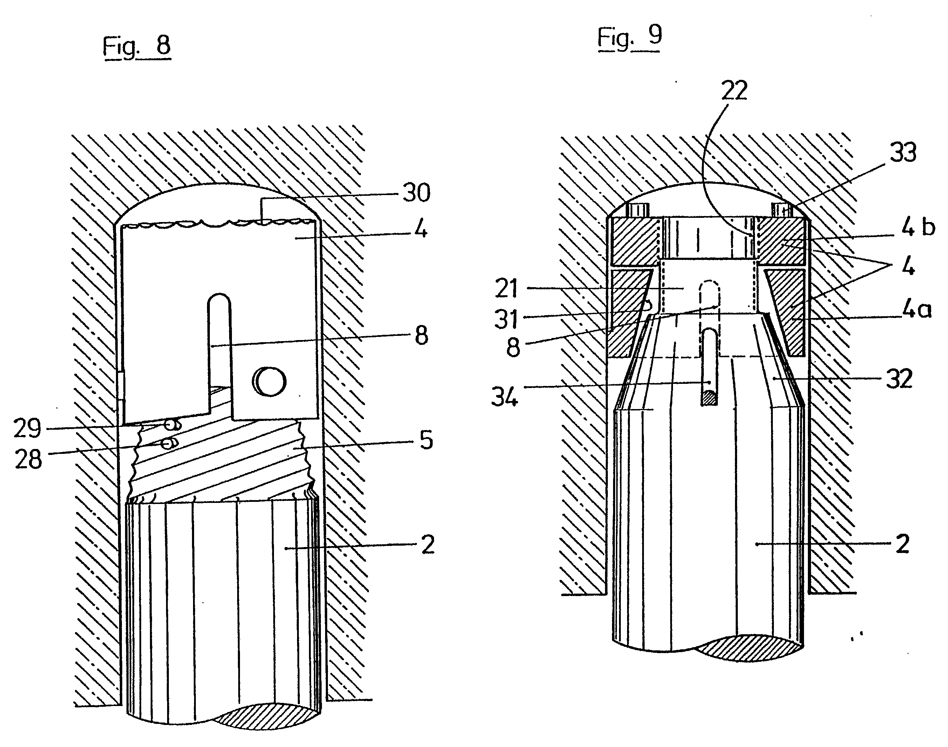

Bei dem Ankerbolzen nach Fig. 8 ist wie bei dem ersten Ausführungsbeispiel zwischen dem Schaft 2 und der Spreizhülse 4 eine Gewindeverbindung vorhanden. Außerdem sind zur Herstellung eines zeitweisen Drehschlusses zwei Mitnehmerstifte 28 vorgesehen, die so bemessen sind, daß sie durch einen sich beim Eintreiben vergrößernden Drehwiderstand abscheren. Bei Verwendung derartiger Mitnehmerstifte ist eine Steuerung des zeitweisen Mitdrehens der Spreizhülse 4 beim Hinterschneidvorgang möglich. Es kann dann der Hinterschneidvorgang auch gewährleistet werden, wenn der Reibungsschluß zwischen den Gewindeflanken nicht ausreichend groß bemessen werden kann. Die Spreizhülse 4 ist mit wenigstens einer Auflaufkante ausgebildet, gegen die die Mitnehmerstifte beim Eindrehen des Schaftes in die Spreizhülse stoßen. Als Auflaufkante kann beispielsweise die vordere ringförmige Stirnfläche oder eine Kante eines Längsschlitzes 8 dienen. Im dargestellten Fall ist ein Abschnitt 29 der vorderen Stirnfläche der Spreizhülse 4 in Umfangsrichtung steigend ausgebildet, wobei der Steigungswinkel etwas kleiner als der des Innengewindes der Spreizhülse gewählt ist und dieser Abschnitt als Auflaufkante für die Mitnehmerstifte 28 vorgesehen. Der Neigungswinkel des sich verjüngenden Abschnittes des Schaftes ist, verglichen mit der ersten Ausführungsform verringert, wodurch auch die durch den Reibungsschluß übertragbaren Kräfte verringert sind.

Wird bei der beschriebenen Ausführungsform der Schaft 2 in die Hülse 4 eingedreht, dann wird diese bei im Bohrloch festgehaltener Spreizhülse zunächst gespreizt, bis der in Fig. 8 oben dargestellte Mitnehmerstift 28 gegen die Auflaufkante 29 trifft. Hierdurch wird die Spreizhülse mitgenommen, wobei die Auflaufkante eine Scherkraft auf den Mitnehmerstift ausübt. Diese Scherkraft schwankt bei einer schlagenden Beanspruchung in weiten Grenzen, wenn, wie bei dem Ausführungsbeispiel nach Fig. 8 dargestellt, auf der hinteren Stirnfläche der Spreizhülse 4 eine Profilierung 30 vorgesehen ist, die bei einer Schlagbeanspruchung die Festhaltekraft der Spreizhülse im Bohrloch schlagartig erhöht. Hierdurch wird schließlich der obere Mitnehmerstift 28 abgeschert und bei im Bohrloch festgehaltener Spreizhülse 4 der Schaft 2 weiter eingedreht, bis der nächste Mitnehmerstift 28 gegen eine Kante der Spreizhülse 4 stößt und bei geeigneter Bemessung eine kurzzeitige weitere Mitnahme der Spreizhülse unter Vergrößerung der Hinterschneidung bewirkt.

Bei dem in Fig. 9 dargestellten Ausführungsbeispiel ist die Spreizhülse 4 zweiteilig ausgebildet, wobei der eine Teil drehfest in das Bohrloch eingesetzt ist und zur Herstellung des in Ausziehrichtung des Schaftes notwendigen Formschlusses dient, während der andere Teil zur Herstellung der Hinterschneidung bei der Eintreibbewegung des Schaftes mitgedreht wird. Die Spreizhülse 4 besteht aus dem vorderen Teil 4a und dem hinteren Teil 4b, die relativ zueinander drehbar und in Ausziehrichtung des Schaftes formschlüssig verbunden sind. Der vordere Teil 4a der Spreizhülse ist mit einer konischen Bohrung 31 versehen, der hintere Teil enthält einen Gewindeabschnitt 22. Der in die konische Bohrung einzutreibende, sich verjüngende Abschnitt am hinteren Ende des Schaftes 2 ist kegelig ausgebildet, wobei der Kegelwinkel etwa dem Winkel der konischen Bohrung im gespreizten Zustand des vorderen Teils 4a der Spreizhülse 4 entspricht. Ähnlich wie bei der Ausführungsform nach Fig. 6 trägt der Schaft 2 am hinteren Ende einen Gewindeansatz 21, der beim Setzen des Ankerbolzens in den Gewindeabschnitt 22 der Spreizhülse 4 eingreift. An der hinteren Stirnfläche des hinteren Teils 4b der Spreizhülse 4 sind Festhaltestifte 33 vorgesehen, die sicherstellen sollen, daß sich beim Eintreiben des Schaftes 2 in die Spreizhülse der hintere Teil nicht mitdreht. Um hingegen das für den Hinterschneidvorgang erforderliche Mitdrehen des vorderen Teils 4a der Spreizhülse 4 zu erzwingen, weist der Schaft aus der Kegelfläche vorstehende Vorsprünge auf, die in die Längsschlitze 8 des vorderen Teils 4a der Spreizhülse eingreifen.

Nachdem der Ankerbolzen in das Bohrloch, wie in Fig. 9 dargestellt, eingeführt worden ist, wird der Schaft mittels einer drehenden Bewegung in die Spreizhülse 4 eingetrieben. Hierbei wird der hintere Teil 4b durch die Festhaltestifte 33 im Bohrloch festgehalten, während der vordere Teil 4a infolge des Eingriffs zwischen den Vorsprüngen 34 und den Schlitzen 8 mitgedreht wird. Durch die Axialbewegung, die der Schaft 2 ausführt, wird der vordere Teil 4a der Spreizhülse gespreizt und der Hinterschnitt im Bohrloch erzeugt. Am Ende der Eintreibbewegung ist der Gewindeansatz 21 des Schaftes 2 in den Gewindeabschnitt 22 der Spreizhülse 4 eingeschraubt. Diese Gewindeverbindung stellt dann den in Ausziehrichtung des Schaftes wirkenden Formschluß dar. Der vordere und der hintere Teil der Spreizhülse 4 können zwei getrennte Ringteile sein, die, wie in Fig. 9 dargestellt, auf dem Schaft 2 dadurch gehalten werden, daß ein oder zwei Gewindegänge des Gewindeansatzes 21 in den Gewindeabschnitt 22 eingreifen.

Es soll bemerkt werden, daß der Einsatz der zweiteiligen Spreizhülse nicht darauf beschränkt ist, daß die Verbindung zwischen dem Schaft und dem vorderen Teil 4a der Spreizhülse 4 als Kegelverbindung mit glatter Mantelfläche ausgebildet ist. Es kann hier auch eine Gewindeverbindung wie beim ersten Ausführungsbeispiel oder ein durch Umfangsrillen gebildetes Sägenprofil wie beim zweiten Ausführungsbeispiel gewählt werden.

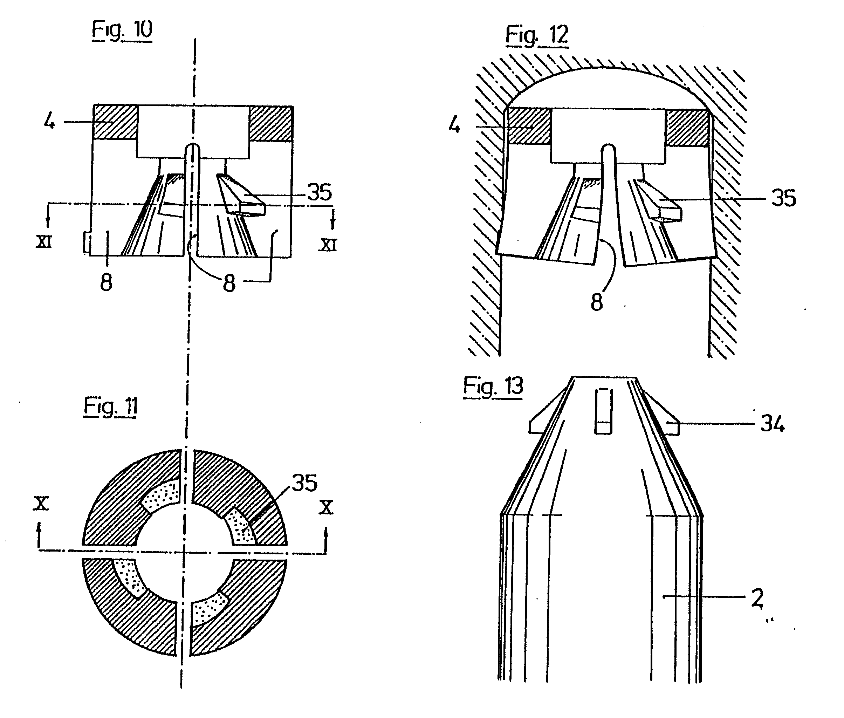

Bei dem in den Fig. 10 bis 13 dargestellten Ausführungsbeispiel eines Ankerbolzens ist eine bajonettartige Verbindung zwischen Schaft 2 und Spreizhülse 4 gewählt.

Fig. 10 zeigt einen Längsschnitt der Spreizhülse 4, Fig. 11 den Schnitt XI - XI von Fig. 10, Fig. 12 eine der Fig. 10 entsprechende Darstellung der Spreizhülse im gespreizten Zustand innerhalb des Bohrloches und Fig. 13 den hinteren Teil des Schaftes 2.

Auf dem Schaft sind vier Vorsprünge 34 vorgesehen, die jeweils in eine axial ausgerichtete Nut, das heißt im vorliegenden Fall in einen Längsschlitz 8 der Spreizhülse 4 eingreifen. Über den so gebildeten Drehschluß kann beim Eintreiben die Spreizhülse in Drehung versetzt werden.

Zur Herstellung des Formschlusses in Ausziehrichtung des Schaftes 2 ist am Ende der Eintreibstrecke jeder axial ausgerichteten Nut 8 eine Umfangsnut 35 zugeordnet, die mit der betreffenden axialen Nut 8 in Verbindung steht. Am Ende der Eintreibstrecke werden durch die Entreibbewegung die Vorsprünge 34 in die Umfangsnuten 35 eingeführt und hierdurch der in Ausziehrichtung des Schaftes wirkende Formschluß zwischen Schaft und Spreizhülse hergestellt.

Obwohl bei den Ausführungsbeispielen der Schaft als Vollschaft dargestellt worden ist, kann er auch hohl ausgebildet sein. Desgleichen brauchen die Schlitze der Spreizhülse nicht parallel zur Mittelachse der Spreizhülse zu verlaufen, sondern können schräg angeordnet sein. Die Bohrung der Spreizhülse muß nicht den gleichen Verjüngungswinkel wie der sich verjüngende Abschnitt des Schaftes aufweisen. Sie kann in dem den verjüngenden Abschnitt aufnehmenden Bereich auch zylindrisch ausgebildet sein.

Bei einer Verbindung zwischen Schaft und Spreizhülse in Form eines Sägenprofils, das durch ein Gewinde oder Umfangsrillen gebildet ist, muß das in der Spreizhülse vorhandene komplementäre Sägenprofil auf dem sich verjüngenden Abschnitt des Schaftes nicht exakt angepaßt sein. Wesentlich ist daß die in dieser Anmeldung beschriebenen Funktionen erfüllt werden. Im Hinblick hierauf ist es zweckmäßiger, wenn die Profile im gespreizten Zustand einander angepaßt sind als im ungespreizten Zustand.

Bei dem in Fig. 14 dargestellten Ausführungsbeispiel ist der Schaft 2 hohl ausgebildet, d.h. in Form einer Hülse und diese weist ein Innengewinde auf. Zwischen Schaft und Spreizhülse 4 ist eine Verbindung in Form eines Sägenprofils, vorzugsweise eine Gewindeverbindung, ähnlich dem Beispiel nach Fig. 1 vorgesehen. Die Längsschlitze 8 der Spreizhülse 4 enden kurz vor der vorderen Stirnfläche 9, um beim Einschrauben des Schaftes 2 in die Spreizhülse 4 zunächst einen höheren Reibungsschluß zu erzielen. Wenn der Schaft ausreichend weit in die Spreizhülse eingetrieben ist, brechen die dünnen Verbindungsstege am vorderen Ende der Längsschlitze 8 und die Spreizhülse wird wie beschrieben aufgeweitet. Als Schneidelemente sind hier schraubenlinienförmig angeordnete vorstehende Schneiden 11 vorgesehen. Die Anordnung der Schraubenlinien kann bei einer Hülse gegenläufig sein, so wie es in Fig. 14 dargestellt ist. Im übrigen sind auf der hinteren Stirnfläche noch Festhalteleisten 14 vorgesehen, die den Festhaltestiften 33 der Ausführungsform nach Fig. 9 entsprechen.

**Patentansprüche**

1. Verfahren zum Setzen eines Ankerbolzens in einem Befestigungsgrund mit den folgenden Merkmalen:

    a) es wird eine Spreizhülse mit ihrem hinteren Ende voran in ein Bohrloch des Befestigungsgrundes eingeführt, die von einer vorderen ringförmigen Stirnfläche ausgehende Schlitze sowie wenigstens in dem an diese Stirnfläche angrenzenden Bereich der Mantelfläche aus dieser vorstehende Schneidelemente aufweist,

    b) durch Eintreiben eines sich verjügenden Abschnittes am hinteren Ende eines Schaftes in die Spreizhülse mittels einer Axial- und Drehbewegung wird die Spreizhülse gespreizt und in Drehung versetzt und hierdurch im Bohrloch eine Hinterschneidung mit einem Absatz vor der vorderen Stirnfläche der Spreizhülse erzeugt,

    c) durch einen in Ausziehrichtung wirkenden Formschluß wird ein Bolzen in der Spreizhülse verankert, der mit dieser den Ankerbolzen bildet, dadurch **gekennzeichnet,** daß

    d) der Schaft als Bolzen ausgebildet wird,

    e) durch einen in Drehrichtung wirkenden Formschluß und/oder durch einen Reibungsschluß zwischen Schaft und Spreizhülse diese beim Eintreiben des Schaftes wenigstens zeitweise mitgedreht wird und

    f) durch die Eintreibbewegung des Schaftes zwischen diesem und der Spreizhülse am Ende des Spreizvorgangs der in Ausziehrichtung des Schaftes wirkende Formschluß zwischen Schaft und Spreizhülse hergestellt wird.

2. Verfahren nach Anspruch 1, **dadurch gekennzeichnet,** daß der in Ausziehrichtung des Schaftes wirkende Formschluß durch wenigstens einen absatzförmigen Eingriff zwischen Schaft und Spreizhülse gebildet wird, der durch die Axialbewegung des Schaftes unter kurzzeitigem. Spreizen und Zurückfedern der Spreizhülse herstellbar ist.

3. Verfahren nach Anspruch 2, **dadurch gekennzeichnet,** daß auf dem in die Spreizhülse eindringenden Bereich des Schaftes ein durch Umfangsrillen gebildetes Sägenprofil und in der Bohrung der Spreizhülse ein komplementäres Sägenprofil vorhanden ist und durch die Axialbewegung des Schaftes die beiden Sägenprofile in Eingriff gebracht werden.

4. Verfahren nach einem der Ansprüche 1 bis 3, dadurch **gekennzeichnet,** daß auf dem in die Spreizhülse eindringenden Bereich des Schaftes ein durch Umfangsrillen und/oder ein durch ein Außengewinde gebildetes Sägenprofil und in der Bohrung der Spreizhülse ein komplementäres Sägenprofil vorhanden ist und durch einen Reibungsschluß zwischen Schaft und Spreizhülse beim Eintreiben des Schaftes in die Spreizhülse ein zeitweises Mitdrehen der Spreizhülse unter Überwindung der Festhaltekraft der Spreizhülse im Bohrloch ermöglicht wird.

5. Verfahren nach Anspruch 4, dadurch **gekennzeichnet,** daß das zeitweise Mitdrehen durch den Reibungsschluß zwischen den Zahnflanken des Sägenprofils bewirkt oder unterstützt wird.

6. Verfahren nach einem der Ansprüche 1 bis 5, dadurch **gekennzeichnet,** daß ein zeitweises Mitdrehen der Spreizhülse durch wenigstens einen Mitnehmerstift erfolgt, der durch einen sich beim Eintreiben vergrößernden Drehwiderstand abschert.

7. Verfahren nach einem der Ansprüche 1 bis 3, dadurch **gekennzeichnet,** daß auf dem Schaft wenigstens ein Vorsprung vorgesehen ist, der beim Eintreiben des Schaftes in eine axial ausgerichtete Nut der Spreizhülse eingreift und über den so gebildeten Drehschluß die Spreizhülse in Drehung versetzt.

8. Verfahren nach Anspruch 7, dadurch **gekennzeichnet,** daß zur Herstellung des Formschlusses in Auszierichtung des Schaftes der Vorsprung am Ende der Eintreibstrecke aufgrund der Eintreibbewegung in eine mit der axial ausgerichteten Nut verbundene Umfangsnut eingeführt wird.

9. Verfahren nach einem der Ansprüche 1 bis 6, dadurch **gekennzeichnet,** daß der Schaft am hinteren Ende anschließend an den sich verjügenden Abschnitt einen zylindrischen Gewindeansatz trägt, der bei der Eintreibbewegung des Schaftes in einen Gewindeabschnitt der Spreizhülse eingeschraubt wird.

10. Verfahren nach Anspruch 9, dadurch **gekennzeichnet,** daß die Spreizhülse aus einem vorderen und einem hinteren Teil besteht, die relativ zueinander drehbar sind, im hinteren, im Bohrloch drehfest einzusetzenden Teil der Spreizhülse ein Innengewinde zur Aufnahme des Gewindeansatzes des Schaftes vorhanden ist und zwischen Schaft und dem vorderen Teil der Spreizhülse wenigstens auf einem Teil der Eintreibstrecke ein in Drehrichtung wirkender Formschluß vorgesehen ist.

11. Verfahren nach einem der Ansprüche 1 bis 10, dadurch **gekennzeichnet,** daß nach Herstellung der Hinterschneidung in der gewünschten Tiefe die Spreizhülse an einer weiteren Drehbewegung gehindert und durch Axialverschiebung des Schaftes um ein vorgegebenes Maß bis zu einer kraftschlüssigen Verbindung weitergespreizt wird.

12. Verfahren nach einem der Ansprüche 1 bis 11, dadurch **gekennzeichnet,** daß die Axialverschiebung des Schaftes durch auf diesen ausgeübte Schläge erfolgt.

13. Verfahren nach einem der Ansprüche 1 bis 12, dadurch **gekennzeichnet,** daß die Axialverschiebung des Schaftes durch eine Drehbewegung über eine Gewindeverbindung erfolgt.

14. Verfahren nach Anspruch 13, dadurch **gekennzeichnet,** daß die Drehbewegung mit einer Schlagbewegung gekoppelt ist.

15. Ankerbolzen für ein Verfahren nach einem der Ansprüche 4 bis 6 mit den folgenden Merkmalen:

a) er enthält einen zylindrischen Schaft, dessen hinteres Ende einen sich verjüngenden Abschnitt aufweist,

b) auf diesem Abschnitt ist eine Spreizhülse aufgesetzt, die von einer vorderen ringförmigen Stirnfläche ausgehende Schlitze aufweist und aus ihrer Mantelfläche vorstehende Elemente enthält,

c) der sich verjüngende Abschnitt am Ende des Schaftes ist wenigstens auf einem Teil seiner Länge mit einem Außengewinde versehen und die Spreizhülse weist ein daran angepaßtes Innengewinde auf, dadurch **gekennzeichnet,** daß

d) wenigstens in dem an die vordere Stirnfläche der Spreizhülse angrenzenden Bereich der Mantelfläche Schneidelemente zur Erzeugung eines Hinterschnitts in einem Bohrloch vorhanden sind.

16. Ankerbolzen nach Anspruch 15, dadurch **gekennzeichnet,** daß der Neigungswinkel des sich verjüngenden Abschnittes, bezogen auf die Mittelachse, zwischen 10° und 50° liegt.

17. Ankerbolzen nach Anspruch 16, dadurch **gekennzeichnet,** daß der Neigungswinkel zwischen 10° und 30° liegt.

18. Ankerbolzen nach einem der Ansprüche 15 bis 17, dadurch **gekennzeichnet,** daß die Steigungen des Innengewindes der Spreizhülse und des Außengewindes auf dem sich verjüngenden Abschnitt des Schaftes wenigstens im hinteren Bereich etwas verschieden voneinander sind.

19. Ankerbolzen nach einem der Ansprüche 15 bis 18, dadurch **gekennzeichnet,** daß aus dem sich verjüngenden Abschnitt des Schaftes wenigstens ein Mitnehmerstift vorsteht, der beim Eindrehen des Schaftes in die Spreizhülse gegen eine Auflaufkante der Spreizhülse stößt.

20. Ankerbolzen nach Anspruch 19, dadurch **gekennzeichnet,** daß ein Abschnitt der vorderen Stirnfläche der Spreizhülse in Umfangsrichtung ansteigend ausgebildet ist, wobei der Steigungswinkel etwas kleiner als der des Innengewindes der Spreizhülse gewählt ist, und daß dieser Abschnitt die Auflaufkante für den Mitnehmerstift bildet.

21. Ankerbolzen nach Anspruch 20, dadurch **gekennzeichnet,** daß der ansteigende Abschnitt der vorderen Stirnfläche der Spreizhülse stufenförmig ausgebildet ist.

22. Ankerbolzen nach Anspruch 20 oder 21, dadurch **gekennzeichnet,** daß der ansteigende Abschnitt der vorderen Stirnfläche der Spreizhülse angrenzend an einen der Schlitze der Spreizhülse vorgesehen ist.

23. Ankerbolzen nach einem der Ansprüche 15 bis 22, dadurch **gekennzeichnet,** daß die Gewindeflanken des Außengewindes auf der dem hinteren Schaftende zugewandten Seite schräg und auf der dem hinteren Schaftende abgewandten Seite etwa senkrecht zur Schaftachse verlaufen. :

24. Ankerbolzen nach einem der Ansprüche 15 bis 23, dadurch **gekennzeichnet,** daß die Steigung des Außengewindes und/oder des Innengewindes zum hinteren Schaftende hin abnimmt.

25. Ankerbolzen für ein Verfahren nach einem der Ansprüche 3 bis 6 mit den folgenden Merkmalen:

a) er enthält einen zylindrischen Schaft, dessen hinteres Ende einen sich verjüngenden Abschnitt aufweist,

b) auf diesem Abschnitt ist eine Spreizhülse aufgesetzt, die von einer vorderen ringförmigen Stirnfläche ausgehende Schlitze aufweist und aus ihrer Mantelfläche vorstehende Elemente enthält,

c) der sich verjüngende Abschnitt am Ende des Schaftes weist wenigstens auf einem Teil seiner Länge ein Sägenprofil auf und in der Bohrung der Spreizhülse ist ein komplementäres Sägenprofil vorhanden, dadurch **gekennzeichnet,** daß

d) die Sägenprofile die Profile von Umfangsrillen sind, die auf dem Schaft und in der Spreizhülse vorgesehen sind, und

e) ein in Drehrichtung wirkender Formschluß und/oder ein Reibungsschluß zwischen Schaft und Spreizhülse wenigstens auf einem Teil der Eintreibstrecke des Schaftes in die Spreizhülse ein Mitdrehen der Spreizhülse gewährleistet.

26. Ankerbolzen nach Anspruch 25, dadurch **gekennzeichnet,** daß der in Drehrichtung wirkende Formschluß im hinteren Bereich der Eintreibstrecke gelöst ist.

27. Ankerbolzen nach Anspruch 25 oder 26, dadurch **gekennzeichnet,** daß der Schaft wenigstens einen Vorsprung aufweist, der zur Bildung des in Drehrichtung wirkenden Formschlusses in eine Nut der Spreizhülse eingreift.

28. Ankerbolzen nach Anspruch 27, dadurch **gekennzeichnet,** daß als Nut einer der von der Stirnfläche der Spreizhülse ausgehenden Schlitze dient.

29. Ankerbolzen nach einem der Ansprüche 25 bis 28, dadurch **gekennzeichnet,** daß die Zahnflanken des Sägenprofils des Schaftes auf der dem hinteren Schaftende zugewandten Seite schräg und auf der dem hinteren Schaftende abgewandten Seite etwa senkrecht zur Schaftachse verlaufen.

30. Ankerbolzen nach einem der Ansprüche 15 bis 29, dadurch **gekennzeichnet,** daß der Schaft am hinteren Ende anschließend an den sich verjüngenden Abschnitt einen Gewindeansatz trägt, der in einen Gewindeabschnitt der Spreizhülse eingreift.

31. Ankerbolzen nach einem der Ansprüche 15 bis 30, dadurch **gekennzeichnet,** daß die Spreizhülse aus einem vorderen und einem hinteren Teil besteht, die relativ zueinander drehbar und in Ausziehrichtung des Schaftes formschlüssig verbunden sind.

32. Ankerbolzen mit einem zylindrischen Schaft und einem spreizbaren Kopf an dem in ein zylindrisches Bohrloch eines Befestigungsgrundes einzuführenden hinteren Ende des Schaftes sowie mit über die Mantelfläche des Kopfes vorstehenden Schneidelementen, durch die beim Drehen des Kopfes zusammen mit dem Schaft und Spreizen des Kopfes bei axialem Vorschub des Schaftes im Bohrloch eine Hinterschneidung erzeugbar ist, ferner im gespreizten Zustand des Kopfes dieser, vom vorderen Ende des Schaftes aus gesehen, eine Ringschulter aufweist, dadurch **gekennzeichnet,** daß der spreizbare Kopf als eine auf das hintere Ende des Schaftes aufgesetzte Spreizhülse mit einer vorderen Stirnseite ausgebildet ist und die vorstehenden Schneidelemente wenigstens in dem an die vordere Stirnseite angrenzenden Bereich der Mantelfläche der Spreizhülse vorgesehen sind, ferner das hintere Ende des Schaftes ein als Spreizkeil bzw. Spreizkegel wirkendes, sich verjüngendes Ende und die Spreizhülse eine daran angepaßte Axialbohrung aufweist.

33. Ankerbolzen nach einem der Ansprüche 15 bis 32, dadurch **gekennzeichnet,** daß die Spreizhülse mehrere längs des Umfangs verteilte Längsschlitze aufweist.

34. Ankerbolzen nach einem der Ansprüche 15 bis 32 dadurch **gekennzeichnet,** daß die Spreizhülse aus mehreren Kegelsegmenten aufgebaut ist, die durch wenigstens einen Federring zusammengespannt sind.

35. Ankerbolzen nach einem der Ansprüche 15 bis 34, da durch **gekennzeichnet,** daß die Schneidelemente durch Hartmetalleinsätze gebildet sind.

36. Ankerbolzen nach einem der Ansprüche 15 bis 35, **gekennzeichnet** durch einen sich in Axialrichtung ändernden Neigungswinkel des sich verjüngenden Abschnittes des Schaftes.

## Claims

1. A method of setting an anchor bolt in a fixing support comprising the following features:
   a) an expansion sleeve is introduced with its rear end leading into a bore hole in the support, which sleeve has slots extending from a front annular end face and at least in the region of the peripheral surface adjoining said end face, cutting elements which project from said peripheral surface,
   b) by driving a tapering portion at the rear end of a shank into the expansion sleeve by means of an axial and rotary movement, the expansion sleeve is expanded and caused to rotate and thereby produces in the bore hole an undercut portion with a shoulder in front of the front end face of the expansion sleeve, and
   c) a bolt is anchored in the expansion sleeve by a positive connection which is operative in the withdrawal direction, the bolt with the expansion sleeve forming the anchor bolt, characterised in that
   d) the shank is in the form of a bolt,
   e) the expansion sleeve is also rotated at least for a time when the shank is driven in, by a positive connection which is operative in the direction of rotation and/or by a frictional engagement between the shank and the expansion sleeve, and
   f) the positive connection between the shank and the expansion sleeve, which is operative in the withdrawal direction of the shank, is made by the driving-in movement of the shank between same and the expansion sleeve at the end ōf the expansion operation.

2. A method according to claim 1 characterised in that the positive connection which is operative in the withdrawal direction of the shank is formed by at least one step-form engagement between the shank and the expansion sleeve, which can be produced by axial movement of the shank, with temporary expansion and resilient return movement of the expansion sleeve.

3. A method according to claim 2 characterised in that provided on the region of the shank which penetrates into the expansion sleeve is a sawtooth profile formed by peripheral grooves and provided in the bore in the expansion sleeve is a complementary sawtooth profile and the two saw tooth profiles can be brought into engagement by the axial movement of the shank.

4. A method according to one of claims 1 to 3 characterised in that provided on the region of the shank which penetrates into the expansion sleeve is a sawtooth profile formed by peripheral grooves and/or a sawtooth profile formed by an external screwthread and provided in the bore in the expansion sleeve is a complementary sawtooth profile and the expansion sleeve can be entrained for a time by virtue of a frictional engagement between the shank and the expansion sleeve, when the shank is driven into the expansion sleeve, with the restraining force of the expansion sleeve in the bore hole being overcome.

5. A method according to claim 4 characterised in that the temporary rotary movement of the expansion sleeve is produced or assisted by the frictional engagement between the flanks of the teeth of the sawtooth profile.

6. A method according to one of claims 1 to 5 characterised in that the expansion sleeve is rotated for a time by at least one entrainment pin which shears off due to a resistance to rotary movement which increases in the driving-in operation.

7. A method according to one of claims 1 to 3 characterised in that provided on the shank is at least one projection which, when the shank is driven in, engages into an axially oriented groove in the expansion sleeve and thus causes the expansion sleeve to rotate by way of the rotary connection formed in that way.

8. A method according to claim 7 characterised in that, to make the positive connection in the withdrawal direction of the shank, the projection is introduced into a peripheral groove connected to the axially oriented groove, at the end of the driving-in distance, by virtue of the driving-in movement.

9. A method according to one of claims 1 to 6 characterised in that at the rear end adjoining the tapering portion the shank carries a cylindrical screwthreaded section which, in the driving-in movement of the shank, is screwed into a screwthread portion on the expansion sleeve.

10. A method according to claim 9 characterised in that the expansion sleeve comprises a front portion and a rear portion which are rotatable relative to each other, the rear portion of the expansion sleeve which is to be non-rotatably fitted in the bore hole has an internal screwthread for receiving the screwthreaded section of the shank, and a positive connection which is operative in the direction of rotation is provided between the shank and the front portion of the expansion sleeve at least over a part of the driving-in distance.

11. A method according to one of claims 1 to 10 characterised in that, after the undercut portion has been formed to the desired depth, the expansion sleeve is prevented from further rotary movement and is further spread by axial displacement of the shank by a predetermined amount until a force-locking connection is formed.

12. A method according to one of claims 1 to 11 characterised in that the axial displacement of the shank is produced by blows applied thereto.

13. A method according to one of claims 1 to 12 characterised in that the axial displacement of the shank is produced by a rotary movement by way of a screwthread connection.

14. A method according to claim 13 characterised in that the rotary movement is coupled with a hammer movement.

15. An anchor bolt for a method according to one of claims 4 to 6 having the following features:

a) it includes a cylindrical shank, the rear end of which has a tapering portion,

b) fitted on said portion is an expansion sleeve which has slots extending from a front annular end face and which includes elements projecting from its peripheral surface,

c) the tapering portion at the end of the shank is provided with an external screwthread at least over a part of its length and the expansion sleeve has an internal screwthread which is adapted thereto, characterised in that

d) cutting elements for producing an undercut configuration in a bore hole are provided at least in the region of the peripheral surface adjoining the front end face of the expansion sleeve.

16. An anchor bolt according to claim 15 characterised in that the angle of inclination of the tapering portion, relative to the axial centre line, is between 10° and 50°.

17. An anchor bolt according to claim 16 characterised in that the angle of inclination is between 10° and 30°.

18. An anchor bolt according to one of claims 15 to 17 characterised in that the pitches of the internal screwthread of the expansion sleeve and the external screwthread on the tapering portion of the shank are somewhat different from each other at least in the rearward region.

19. An anchor bolt according to one of claims 15 to 18 characterised in that projecting from the tapering portion of the shank is at least one entrainment pin which, when the shank is moved into the expansion sleeve by a rotary movement, comes into contact against an abutment edge on the expansion sleeve.

20. An anchor bolt according to claim 19 characterised in that a portion of the front end face of the expansion sleeve is of a rising configuration in the peripheral direction, wherein the pitch angle is somewhat smaller than that of the internal screwthread of the expansion sleeve, and that said portion forms the abutment edge for the entrainment pin.

21. An anchor bolt according to claim 20 characterised in that the rising portion of the front end face of the expansion sleeve is of a stepped configuration.

22. An anchor bolt according to claim 20 or claim 21 characterised in that the rising portion of the front end face of the expansion sleeve is disposed adjoining one of the slots in the expansion sleeve.

23. An anchor bolt according to one of claims 15 to 22 characterised in that the flanks of the external screwthread extend inclinedly with respect to the axis of the shank on the side which is towards the rear end of the shank and they extend substantially perpendicularly to the axis of the shank on the side which is remote from the rear end of the shank.

24. An anchor bolt according to one of claims 15 to 23 characterised in that the pitch of the external screwthread and/or the internal screwthread decreases towards the rear end of the shank.

25. An anchor bolt for a method according to one of claims 3 to 6 having the following features:

a) it includes a cylindrical shank, the rear end of which has a tapering portion,

b) fitted on said portion is an expansion sleeve which has slots extending from a front annular end face and includes elements projecting from its peripheral surface,

c) the tapering portion at the end of the shank has a sawtooth profile at least over a portion of its length and a complementary sawtooth profile is provided in the bore in the expansion sleeve, characterised in that

d) the sawtooth profiles are the profiles of peripheral grooves which are provided on the shank and in the expansion sleeve, and

e) a positive connection which is operative in the direction of rotation and/or a frictional connection between the shank and the expansion sleeve ensure that the expansion sleeve is rotated at least over a part of the distance by which the shank is driven into the expansion sleeve.

26. An anchor bolt according to claim 25 characterised in that the positive connection which is operative in the direction of rotation is released in the rearward region of the driving-in distance.

27. An anchor bolt according to claim 25 or claim 26 characterised in that the shank has at least one projection which engages into a groove in the expansion sleeve to form the positive connection which is operative in the direction of rotation.

28. An anchor bolt according to claim 27 characterised in that one of the slots extending from the end face of the expansion sleeve serves as the groove.

29. An anchor bolt according to one of claims 25 to 28 characterised in that the flanks of the teeth of the sawtooth profile on the shank extend inclinedly with respect to the axis of the shank on the side towards the rear end of the shank and they extend substantially normal to the axis of the shank on the side which is remote from the rear end of the shank.

30. An anchor bolt according to one of claims 15 to 29 characterised in that at the rear end adjoining the tapering portion the shank carries a screwthreaded section which engages into a screwthread portion on the expansion sleeve.

31. An anchor bolt according to one of claims 15 to 30 characterised in that the expansion sleeve comprises a front portion and a rear portion which are rotatable relative to each other and which are positively connected in the withdrawal direction of the shank.

32. An anchor bolt comprising a cylindrical shank and an expandable head at the rear end of the shank which is to be introduced into a cylindrical bore hole in a fixing support, and cutting elements which project beyond the peripheral surface of the head and by means of which an undercut configuration can be produced in the bore hole upon rotary movement of the head together with the shank and expansion of the head upon forward axial movement of the shank, wherein moreover in the expanded condition of the head the head, as viewed from the front end of the shank, has an annular shoulder, characterised in that the expandable head is in the form of an expansion sleeve having a front end face and which is fitted on to the rear end of the shank and the projecting cutting elements are provided at least in the region of the peripheral surface of the expansion sleeve, which adjoins the front end face, and in addition the rear end of the shank has a tapering end which acts as an expansion wedge or cone and the expansion sleeve has an axial bore adapted to said tapering end.

33. An anchor bolt according to one of claims 15, to 32 characterised in that the expansion sleeve has a plurality of longitudinal slots distributed around the periphery thereof.

34. An anchor bolt according to one of claims 15 to 23 characterised in that the expansion sleeve is formed from a plurality of cone segments which are clamped together by at least one spring ring.

35. An anchor bolt according to one of claims 15 to 34 characterised in that the cutting elements are formed by hard metal inserts.

36. An anchor bolt according to one of claims 15 to 35 characterised by the tapering portion of the shank having an angle of inclination which varies in the axial direction.

## Revendications

1. Procédé de pose d'un boulon d'ancrage dans un terrain à consolider, ayant les caractéristiques suivantes:

a) on introduit une douille expansible par son extrémité arrière dans un trou de forage du terrain à consolider dans laquelle douille comporte une fente issue d'une surface frontale antérieure annulaire ainsi qu'au moins, dans la région de la surface latérale voisine de la surface frontale, un élément coupant en saillie de la surface latérale,

b) en enfonçant une section, s'amincissant à l'extrémité arrière, d'un fût dans la douille expansible, au moyen d'un mouvement axial et de rotation, on expanse la douille expansible et on la fait tourner et on produit ainsi dans le trou de forage une contredépouille avec un épaulement devant la surface frontale antérieure de la douille expansible,

c) par une liaison par complémentarité de formes agissant dans le sens de l'extraction, on ancre dans la douille expansible un boulon qui forme avec celle-ci le boulon d'ancrage, remarquable en ce que

d) le fût est constitué en boulon,

e) par une liaison par complémentarité de formes agissant dans le sens de la rotation et/ou par une liaison par fiction entre le fût et la douille expansible, on entraîne celle-ci en rotation, au moins temporairement lorsque l'on enfonce le fût et

f) par le mouvement d'enfoncement du fût, on produit entre celui-ci et la douille expansible, à la fin du processus d'expansion, la liaison par complémentarité de formes entre le fût et la douille expansible agissant dans le sens de l'extraction du fût.

2. Procédé selon la revendication 1, caractérisé en ce que la liaison par complémentarité de formes agissant dans le sens de l'extraction du fût, est formée par au moins un contact en forme d'épaulement entre le fût et la douille expansible, qui peut être obtenu par le mouvement axial du fût, avec expansion de brève durée et retour élastique de la douille expansible.

3. Procédé suivant la revendication 2, caractérisé en ce que dans la partie du fût qui pénètre dans la douille expansible, est prévu un profil en dents de scie formé par des rainures périphériques et dans l'alésage de la douille expansible, est prévu un profil complémentaire en dents de scie et les deux profils en dents de scie étant mis en prise par le mouvement axial du fût.

4. Procédé suivant l'une des revendications 1 à 3, caractérisé en ce que sur la partie du fût pénétrant dans la douille expansible, est prévu un profil en dents de scie formé par des rainures périphériques et/ou par un filetage extérieur et dans l'alésage de la douille expansible est prévu un profil complémentaire en dents de scie, et une liaison par friction entre le fût et la douille expansible lors de l'enfoncement du fût dans la douille expansible, permet un entraînement temporaire en rotation de la douille expansible en surmontant la force de retenue de la douille expansible dans le trou de forage.

5. Procédé suivant la revendication 4, caractérisé en ce que l'entraînement temporaire en rotation est provoqué ou est favorisé par la liaison par friction entre les flancs des dents du profil en dents de scie.

6. Procédé suivant l'une des revendications 1 à 5, caractérisé en ce qu'un entraînement temporaire en rotation de la douille expansible est effectué par au moins un doigt d'entraînement qui est cisaillé par une résistance à la rotation plus forte lors de l'enfoncement.

7. Procédé suivant l'une des revendications 1 à 3, caractérisé en ce que sur le fût est prévue au moins une saillie qui, lors de l'enfoncement du fût, pénètre dans une gorge dirigée axialement de la douille expansible et met la douille expansible en rotation par la liaison de solidarité en rotaion ainsi formée.

8. Procédé suivant la revendication 7, caractérisé en ce que pour obtenir la liaison par complémentarité de formes dans le sens de l'extraction du fût, la saillie est introduite à l'extrémité de la zone d'enfoncement en raison du mouvement d'enfoncement dans une gorge périphérique reliée à la gorge dirigée axialement.

9. Procédé suivant l'une des revendications 1 à 6, caractérisé en ce que le fût porte à l'extrémité arrière, à la suite du tronçon s'amincissant, un prolongement cylindrique fileté qui, lors du mouvement d'enfoncement du fût, se visse dans un tronçon taraudé de la douille expansible.

10. Procédé suivant la revendication 9, caractérisé en ce que la douille expansible est constituée d'une partie antérieure et d'une partie postérieure qui peuvent tourner l'une par rapport à l'autre, qu'il est prévu dans la partie arrière de la douille expansible, qui peut être introduite sans tourner dans le trou de forage, un taraudage de réception du filitage du fût, alors qu'entre le fût et la partie antérieure de la douille expansible, est prévue au moins sur une partie de la zone d'enfoncement une liaison par complémentarité de formes agissant dans le sens de la rotation.

11. Procédé suivant l'une des revendications 1 à 10, caractérisé en ce qu'après la réalisation de la contre-dépouille à la profondeur souhaitée, on empêche la douille expansible de continuer à tourner et on poursuit son expansion en faisant coulisser le fût d'une longueur prescrite jusqu'à obtenir une liaison à transmission de forces.

12. Procédé suivant l'une des revendications 1 à 11, caractérisé en ce qu'on déplace axialement le fût en lui appliquant des coups.

13. Procédé suivant l'une des revendications 1 à 12, caractérisé en ce qu'on déplace axialement le fût par un mouvement de rotation par l'intermédiaire d'une liaison par filetages.

14. Procédé suivant la revendication 13, caractérisé en ce que le mouvement de rotation est couplé à un déplacement sous l'effet de coups.

15. Boulon d'ancrage pour un procédé suivant l'une des revendications 4 à 6, ayant les caractéristiques suivantes:

a) il comporte un fût cylindrique dont l'extrémité arrière présente une section qui s'amincit;

b) sur cette section est enfilée une douille expansible qui présente une fente issue d'une surface frontale antérieure annulaire et qui comporte des éléments en saillie de sa surface latérale;

c) la section qui s'amincit à l'extrémité du fût est munie au moins sur une partie de sa longueur, d'un filetage et la douille expansible comporte un taraudage qui lui est adapté, caractérisé en ce que

d) au moins dans la partie de la surface latérale voisine de la surface frontale antérieure de la douille expansible, sont prévus des éléments coupants pour produire une contre-dépouille dans un trou de forage.

16. Boulon d'ancrage suivant la revendication 15, caractérisé en ce que la section qui s'amincit fait un angle avec l'axe médian compris entre 10° et 50°.

17. Boulon d'ancrage suivant la revendication 16, caractérisé en ce que l'angle est compris entre 10° et 30°.

18. Boulon d'ancrage suivant l'une des revendications 15 à 17, caractérisé en ce que les pas du taraudage de la douille expansible et du filetage sur la section de fût qui s'amincit sont quelque peu différents l'un de l'autre, au moins dans la partie arrière.

19. Boulon d'ancrage suivant l'une des revendications 15 à 18, caractérisé en ce que de la section du fût qui s'amincit, fait saillie au moins un doigt d'entraînement qui, lors de l'introduction en rotation du fût dans la douille expansible, vient porter sur un bord incliné de la douille expansible.

20. Boulon d'ancrage suivant la revendication 19, caractérisé en ce qu'une partie de la surface frontale antérieure de la douille expansible est constituée de manière à s'élever dans la direction périphérique, l'angle d'inclinaison étant un peu plus petit que celui du taraudage de la douille expansible et en ce que cette partie forme le bord incliné que vient heurter le doigt d'entraînement.

21. Boulon d'ancrage suivant la revendication 20, caractérisé en ce que la partie qui s'élève de la surface frontale antérieure de la douille expansible est en forme de palier.

22. Boulon d'ancrage suivant la revendication 20 ou 21, caractérisé en ce que la partie qui s'élève de la surface frontale antérieure de la douille expansible est voisine d'une partie de la fente de la douille expansible.

23. Boulon d'ancrage suivant l'une des revendications 15 à 22, caractérisé en ce que les flancs du filetage sont inclinés du côté tourné vers l'extrémité arrière du fût et sont sensible ment perpendiculaires à l'axe du fût, du côté éloigné de l'extrémité arrière du fût.

24. Boulon d'ancrage suivant l'une des revendications 15 à 23, caractérisé en ce que le pas du filetage et/ou du taraudage diminue en allant vers l'extrémité postérieure du fût.

25. Boulon d'ancrage pour un procédé suivant l'une des revendications 3 à 6 ayant les caractéristiques suivantes:

a) il comporte un fût cylindrique dont l'extrémité arrière présente une section qui s'amincit;

b) sur cette section est enfilée une douille expansible qui présente une fente issue d'une surface frontale antérieure annulaire et qui comporte des éléments en saillie de sa surface latérale;

c) la section qui s'amincit à l'extrémité du fût présente, au moins sur une partie de sa longueur, un profil en dents de scie et il est prévu un profil complémentaire en dents de scie dans l'alésage de la douille expansible, caractérisé en ce que

d) les profils en dents de scie sont les profils de rainures périphériques qui sont prévues sur le fût et dans la douille expansible; et

e) une liaison par complémentarité de formes agissant dans le sens de la rotation, et/ou une liaison par friction entre le fût et la douille expansible, au moins sur une partie de la zone d'enfoncement du fût dans la douille expansible, assure un entraînement en rotation de la douille expansible.

26. Boulon d'ancrage suivant la revendication 25, caractérisé en ce que la liaison par complémentarité de formes agissant dans le sens de la rotation cesse dans la partie arrière de la zone d'enfoncement.

27. Boulon d'ancrage suivant la revendication 25 ou 26, caractérisé en ce que le fût comporte au moins une saillie qui, pour former la liaison par complémentarité de formes agissant dans le sens de la rotation, pénètre dans une gorge de la douille expansible.

28. Boulon d'ancrage suivant la revendication 27, caractérisé en ce que l'une des fentes issues de la surface frontale de la douille expansible sert de gorge.

29. Boulon d'ancrage suivant l'une des revendications 25 à 28, caractérisé en ce que les flancs des dents du profil en dents de scie du fût sont inclinés du côté tourné vers l'extrémité postérieure du fût et sont sensiblement perpendiculaires à l'axe du fût du côté éloigné de l'extrémité arrière du fût.

30. Boulon d'ancrage suivant l'une des revendications 15 à 29, caractérisé en ce que le fût porte, à l'extrémité postérieure qui fait suite au tronçon qui s'amincit, un filetage qui attaque une partie taraudée de la douille expansible.

31. Boulon d'ancrage suivant l'une des revendications 15 à 30, caractérisé en ce que la douille expansible est constituée d'une partie antérieure et d'une partie postérieure qui peuvent tourner l'une par rapport à l'autre et qui sont reliées par complémentarité de formes dans le sens de l'extraction du fût.

32. Boulon d'ancrage ayant un fût cylindrique et une tête expansible à l'extrémité postérieure du fût, cette extrémité pouvant être introduite dans un trou cylindrique de forage d'un terrain à consolider, ainsi que des éléments coupants qui font saillie de la surface latérale de la tête et par lesquels, lors de la rotation de la tête avec le fût et lors de l'expansion de la tête lors de l'avance axiale du fût dans le trou de forage, on peut obtenir une contre-dépouille, la tête présentant, en outre, à l'état expansé, un épaulement annulaire considéré à partir de l'extrémité antérieure du fût, caractérisé en ce que la tête expansible est constituée sous la forme d'une douille expansible enfilée sur l'extrémité arrière du fût et ayant un côté frontal antérieur, les éléments coupants en saillie étant prévus au moins dans la partie de la surface latérale de la douille expansible qui est voisine du côté frontal antérieur, alors que l'extrémité postérieure du fût présente, en outre, une extrémité qui s'amincit et qui agit en tant que coin d'expansion ou de cône d'expansion, et que la douille expansible présente un alésage axial qui y est adapté.

33. Boulon d'ancrage suivant l'une des revendications 15 à 32, caractérisé en ce que la douille expansible présente plusieurs fentes longitudinales réparties le long du pourtour.

34. Boulon d'ancrage suivant l'une des revendications 15 à 32, caractérisé en ce que la douille expansible est constituée de plusieurs segments de cône qui sont bloqués ensemble par au moins un jonc élastique.

35. Boulon d'ancrage suivant l'une des revendications 15 à 34, caractérisé en ce que les éléments coupants sont formés de pièces rapportées en métal dur.

36. Boulon d'ancrage suivant l'une des revendications 5 à 35, caractérisé par un angle d'inclinaison variable dans la direction axiale de la section du fût qui s'amincit.

# FIG. 1

# Fig. 14

EP 0 245 865 B1

FIG.3

FIG.2

Fig. 4

Fig. 5

EP 0 245 865 B1

Fig. 6

Fig. 7

22

27

4
23
21
8
16
15
2

25
24

4
23
26

2

EP 0 245 865 B1

Fig. 8

Fig. 9

30
4
8
29
28
5
2

22
33
4 b
4
4 a
21
31
8
34
32
2

EP 0 245 865 B1

EP 0 245 865 B1

Fig. 10

4

35

XI          XI

8          8

Fig. 11

35

X          X

Fig. 12

4

35

8

Fig. 13

34

2